# EUROPEAN PATENT SPECIFICATION

(11) **EP 0 805 968 B1**
(45) Date of publication and mention of the grant of the patent: **21.09.2005**
(21) Application number: 95935485.3
(22) Date of filing: 01.11.1995
(51) Int. Cl.: G01N 25/18

(54) **REAL-TIME MEASURING METHOD**
ECHTZEITMESSVERFAHREN
PROCEDE DE MESURE EN TEMPS REEL

(30) Priority: 02.11.1994 FI 945168
(43) Date of publication of application: 12.11.1997
(73) Proprietor: Aboatech Ltd., 20520 Turku (FI)
(72) Inventor: ENALA, Jarmo, FIN-21350 Ilmarinen (FI)
(74) Representative: Peltonen, Antti Sakari
(86) International application number: PCT/FI1995/000604
(87) International publication number: WO 1996/014572

(56) References cited:
- EP-A- 0 576 260

## Description

The invention relates to a real-time adaptive measuring method for determining the thermal conductivity K between a sensor and a medium, and for determining the temperature of the medium by means of the sensor that is in a thermal exchange relation with the medium, by changing the temperature of the sensor by means of supplying thermal power to the sensor and by measuring the thermal power supplied to the sensor.

Known devices, especially for example thermoanemometers, for measuring changes in thermal conductivity are based on the use of either two or one temperature element. In devices utilizing two elements, one of the elements is heated and the power used for heating is simultaneously determined, whereas the other element is used to determine the temperature of the medium to be measured. Devices utilizing two temperature elements are divided into two groups according to their operation. In one group, constant power is supplied to the element to be heated and the temperature difference between the elements is measured. In the more common arrangement, the temperature difference between the elements is kept constant and the thermal power required for this purpose is determined. The latter method is more advantageous in that the rate at which the device responds to changes in the quantity to be measured increases in proportion to the amplification of a feedback loop used for adjusting the temperature difference between the elements.

Devices utilizing one temperature element are based either on the observation of the cooling or warm-up rate of the element or on the determination of the thermal power required for maintaining the sensor at the desired temperature. The former method corresponds to a method of two sensors wherein constant power is supplied to the element to be heated and the temperature difference between the elements is measured. The latter method mainly corresponds to a method of two elements wherein the temperature difference between the elements is kept constant and the thermal power required for this purpose is determined. The problem with utilizing one element is that the temperature of the medium is not known, wherefore the power required to maintain the sensor at the desired temperature depends not only on the thermal conductivity of the medium, but also for example on changes in the temperature of the medium, and their effects cannot be distinguished from one another.

US Patent 5,117,691 discloses a one-sensor measuring method that is based on differentiation and that operates without information about the surrounding temperature. The invention according to the present application is based on correlation checking that as an essential part comprises determining the temperature of the medium through calculation. Another significant difference compared to the method of the US patent is that the measurement takes place in real time. The method according to the present invention operates in real time, wherefore no such steady state that is described in the aforementioned US patent and that prevents measurement in real time is required. The device according to the US patent can also be realized in such a way that the temperature of the sensor is not required to stabilize and reach the steady state, but in such a case a demodulator is utilized in the circuit, wherefore measurement results cannot be obtained in real time.

The problem with all measuring devices, such as thermoanemometers, utilizing two temperature sensors is the maintenance of their calibration within a wide temperature range. When measurement is based on measuring the temperature difference between two temperature sensors, their readings must follow each other very closely within the entire operating temperature range. This requires the use of expensive precision components and it still sometimes causes problems for example due to the ageing of components, heat radiation or warming caused by the electronics.

The problem with measuring devices utilizing one temperature element has been their slow response time. The situation can be compared to a conventional thermoanemometer with two temperature sensors, wherein the thermal power is kept constant and the temperature difference between the temperature sensors is measured. In conventional thermoanemometers utilizing two elements, the response time is shortened by keeping the temperature difference between the temperature sensors constant through the adjustment of the thermal power. The speed of the thermoanemometer then increases in proportion to the amplification coefficient used in the adjustment. This idea has not been applicable to cases with one sensor, since the temperature of the medium to be measured is not known, and as the temperature of the medium changes, keeping the temperature sensor at a constant temperature does not ensure that the temperature difference between the sensor and the medium remains constant. In addition to a long response time, another problem is that in the method based on measuring the cooling rate of one sensor, the thermal capacity C of the sensor is assumed to be known or at least constant. Furthermore, the signal-to-noise ratio is poor since the temperature difference between the sensor and the medium is reduced during the measurement, but the noise level remains constant.

The purpose of the invention is to make it possible to measure the temperature of the medium with one temperature sensor. It is then possible to distinguish between those changes in the thermal power that are caused by a property of the medium to be measured, such as flow rate or moisture, and those caused by changes in the temperature of the medium. Furthermore, it is possible to eliminate the requirement concerning the mutual precision of the two temperature elements used in the conventional measurement. Another objective is to provide a simpler and more economical structure than conventionally. Another purpose of the invention is to eliminate the slowness of the sensors of the conventional one temperature element, and the requirement that the thermal capacity of the sensor must be known beforehand or that at least it must be constant. The method according to the invention is also adaptive, i.e. the operation can easily be changed according to the conditions.

The method according to the invention is characterized by what is disclosed in the appended claims.

The method according to the invention has at least the following advantages:
- simple mechanical and electrical implementation (one temperature element and two wires),
- mutual differences between two elements cannot reduce the accuracy of the measurement,
- due to the above reason, the calibration has good stability, and since the measurement is preferably based on the use of a processor the calibration can be performed by means of software. Placing a small memory in connection with a sensor provides sensor-specific calibration data, whereupon the different sensors are interchangeable without any loss in precision, thus making maintenance easier,
- measurement results are obtained in real time unlike in conventional methods with one sensor,
- the thermal slowness of the sensor (i.e. the ratio K/C is low) is not very significant, wherefore the sensor can be made heavy and strong and for example a rotation-symmetrical housing can be used so that the measurement result is independent of the direction of flow,
- the object of measurement is not limited, but the medium surrounding the sensor can be for example a gas, vapour, liquid or solid, or a powder, foam, suspension or some other mixture of several phases,
- the same device can be used to measure thermal conductivity and thermal capacity and temperature,
- as regards the determination of thermal conductivity and thermal capacity, the method is insensitive to an error in the zero point of the temperature measurement,
- as regards the determination of thermal conductivity and thermal capacity, the method is insensitive to the resistance of the coupling wires and the changes therein, wherefore the wire lengths can be great,
- since the method can be used to measure the thermal capacity of the sensor, it is possible to detect if the sensor is soiled, for example. It is also possible to correct the value determined for thermal conductivity with an amount proportionate to the change in the thermal capacity, so that for example the effect of the soiling of the sensor can be compensated for through calculation.

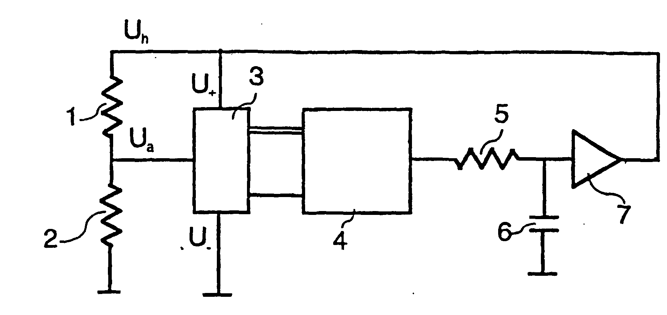

In the following, the invention will be described in greater detail by means of examples and with reference to the accompanying drawing.

The figure of the drawing shows a measuring arrangement implementing the method according to the invention.

In the figure, a voltage Uₐ is used to heat a platinum resistor 2 (Pt100) provided in the medium to be measured. The temperature of the resistor can be determined when the voltages Uₐ and Uₕ are known, since the equation Uₐ=Uₕ•R₂/(R₂+R₁) holds and the value of the sensor/resistor 2 and also its temperature can be calculated from the equation. A value, such as R₁=110Ω, approximating to the resistance of the platinum resistor is selected as the resistance of a resistor 1 that is in series with the platinum resistor, since in such a case a change of a certain degree in the resistance of the platinum resistor corresponds to a change that is as great as possible in the voltage Uₐ. For the sake of simplicity, the positive reference voltage U₊ of an A/D converter 3 is connected to the voltage Uₕ and, correspondingly, U₊ is connected to the earth so that the A/D converter 3 directly measures the ratio Uₐ/Uₕ.

A program which reads the resistance, and therefore information about the temperature Tₐ, of the platinum resistor 2 from the A/D converter 3, and which compares it with the desired value operates in a processor 4. If the temperature is too low, the program makes the output port rise so that it controls, via a low pass filter formed by a resistor 5 and a capacitor 6, an amplifier 7 controlling the heating voltage Uₕ. Correspondingly, if the measured temperature Tₐ of the platinum resistor 2 is too high, the output port is lowered so that the heating voltage decreases. With the present processors, this function can easily be performed for example hundreds of times per second, so that in practice the operation is continuous. The thermal conductivity and/or thermal capacity of the sensor can be calculated at the same frequency or at a frequency that is for example one decade lower, and the desired quantities, such as the flow rate or moisture of the medium, can be further calculated utilizing the former quantities.

If a processor comprising a D/A converter can be used, the resistor 5 and the capacitor 6 are unnecessary and the analog output of the D/A converter of the processor can be used to directly control the amplifier 7. When a processor comprising an A/D converter is used, an external A/D converter 3 is naturally unnecessary. If the capacity of the D/A converter of the processor to supply current is sufficient, the amplifier 7 can also be eliminated. In such a case the device according to the invention only comprises three components: a processor 4, a temperature element 2 and a resistor 1.

The voltage Uₕ is known since the program provides its set value. The resistance and the temperature data of the platinum resistor 2, i.e. the temperature sensor, is obtained from the A/D converter 3, wherefore the power Pₜₒₜ required for heating can be calculated. When the temperature Tₐ of the platinum resistor 2 is adjusted by means of software and the correlation of the thermal conductivity Kₑ with this temperature is calculated, the correct value Tₛ for the temperature estimate Tₑ of the medium can be determined.

Changing the voltage Uₕ alters the temperature Tₐ of the temperature sensor 2. As a time function, the temperature Tₐ can resemble for example a sine function, a saw tooth function, an exponential/rectangular function or some other periodic or aperiodic function. The moving average of the temperature Tₐ can also change slowly, compensating for the changes in the temperature of the medium. The difference between the temperature of the sensor Tₐ and the temperature of the medium Tₛ can also be altered in a desired manner for example in order to change the precision of the measurement or the current consumption of the device. Solving the function of the thermal conductivity Kₑ repeatedly with new temperature values, taking into account a change caused by the altered sensor temperature Tₐ in the thermal power Pₜₒₜ required by the sensor, enables the calculation of the thermal conductivity of the medium and the checking of the correlation between the calculated thermal conductivity Kₑ and the sensor temperature Tₐ for each period, the correlation indicating a change in the temperature Tₛ of the medium. New values for the temperature Tₛ of the medium are obtained approximately once during a temperature cycle of the sensor. There is no need to wait for a new temperature Tₐ to settle at a certain level, but even temporary values that occur for example when the temperature still changes are valid as measurement values since the calculation algorithm does not require the stabilization of the state.

Great changes in the temperature Tₛ of the medium may cause errors in the measurement before the program has managed to correct the temperature estimate Tₑ used for the medium. In such a case, the change in the value of the temperature Tₛ can be compensated for by means of software through extrapolation, and the temperature estimate Tₑ of the medium can be corrected beforehand before the next checking of the correlation between the thermal conductivity Kₑ and the temperature Tₐ of the temperature sensor.

If the power Pₖ needed to maintain the temperature Tₐ of the temperature sensor 2 changes, it results from either a change in the thermal conductivity between the sensor and the medium or from a change in the temperature of the medium, or both. A change of temperature is detected with the above-described correlation checkings that are performed sufficiently frequently, and the change of power possibly remaining after the checking can be ascribed to a change in the thermal conductivity, and therefore this information can be utilized in the equation disclosed below for solving the thermal conductivity.

The example given employs a platinum resistor because it is widely used and because it can be heated with a current that is conducted directly through it. A nickel resistor or for example a piece of metal wire of arbitrary length, a film vaporized on a surface, a semiconductor component, i.e. any device having electrical properties that are a function of temperature, can be utilized equally well. It is also possible to use a method wherein the component measuring the temperature and the component used to heat and/or cool it are separate, for example a combination of a platinum resistor and a heating resistor, or a combination of a semiconductor component and a Peltier element. It is required of such a combination that the thermal conductivity between the sensors used for heating and for temperature measurement is high. It is also possible to use a method wherein the temperature of the sensor is measured externally for example on the basis of the infrared radiation the sensor produces. The sensor can also be heated externally for example by means of electromagnetic radiation.

Let us examine a sensor that is thermally connected to a medium. The medium may be for example a gas, vapour, liquid, solid or a heterogenous system formed by several phases, such as a sol, emulsion, aerosol, foam or a macroscopic phase formed by two liquids, or for example a solid piece in gas, having a surface to which the sensor is attached, or a fluid or gas flowing in a tube, the flow rate being measured with a sensor according to the present invention attached to the exterior of the tube.

Let us denote the temperature of the medium with Tₛ and the temperature of the sensor with Tₐ. If the temperatures of the sensor and of the medium differ from one another, heat is transferred from the sensor to the medium at the power Pₖ which is proportionate to the temperature difference Tₐ-Tₛ between the sensor and the medium and to the thermal conductivity K between the sensor and the medium. When the sensor is to be maintained at a certain temperature Tₐ, the following power is required${\text{P}}_{\text{k}} {\text{=K(T}}_{\text{a}} {\text{-T}}_{\text{s}} \text{).}$ If, for example, the effect of convection current is to be taken into account, a more complicated equation can be used to interconnect Pₖ, K, Tₐ and Tₛ without affecting, however, the principle of the invention. Changing the temperature of the sensor also requires the power P_{c}, which is proportionate to the rate dTₐ/dt at which the temperature of the sensor changes and to the thermal capacity C of the sensor${\text{P}}_{\text{c}} {\text{=C•dT}}_{\text{a}} \text{/dt.}$ The total power to be supplied to the sensor is${\text{P}}_{\text{tot}} {\text{=P}}_{\text{c}} {\text{+P}}_{\text{k}} {\text{=C•dT}}_{\text{a}} {\text{/dt+K(T}}_{\text{a}} {\text{-T}}_{\text{s}} \text{).}$ The total power Pₜₒₜ thus consists of two parts Pₖ and P_{c}, which are used to maintain the temperature of the sensor at a certain constant level and to change it at the desired rate. The power refers to thermal power, wherefore it may also be negative for example if the sensor is at a lower temperature than the medium, or if the rate of change dTₐ/dt of the sensor temperature acquires a sufficiently high negative value. The total power Pₜₒₜ and the temperature Tₐ of the sensor can be measured at desired moments t. The unknowns K, C and Tₛ are to be solved from the equation.

In the invention according to the present application, the temperature of the sensor is a certain time function, and the power to be supplied to the sensor is adjusted, as required, in order to keep the temperature of the sensor at a desired level at each moment. Since P_{c} is proportionate to the rate of change dTₐ/dt of the sensor temperature Tₐ and to the temperature difference Tₐ-Tₛ between the sensor and the medium, selecting Tₛ suitably as a time function enables the differentiation between the determination of the aforementioned two powers, and thus between the determination of the thermal conductivity and the thermal capacity.

In order to understand the determination of the thermal conductivity K and the temperature Tₛ of the medium, determining the thermal conductivity K is examined first. At the moment of measurement, the temperature Tₐ of the sensor is given a constant value, whereupon dTₐ/dt=0, and thus P_{c}=0, and Pₜₒₜ=Pₖ. Consequently,${\text{P}}_{\text{tot}} {\text{=P}}_{\text{k}} {\text{+P}}_{\text{c}} {\text{=P}}_{\text{k}} {\text{=K(T}}_{\text{a}} {\text{-T}}_{\text{s}} \text{)} {\text{<=> K=P}}_{\text{k}} {\text{/(T}}_{\text{a}} {\text{-T}}_{\text{s}} \text{).}$ However, the problem is that the temperature Tₛ of the medium is not known. The temperature Tₛ of the medium can be given the value Tₑ, so that the following equation can be written${\text{K}}_{\text{e}} {\text{=P}}_{\text{k}} {\text{/(T}}_{\text{a}} {\text{-T}}_{\text{e}} \text{)}$ wherein Kₑ is the value calculated for K when the temperature of the medium is given the estimated value of Tₑ. When the exact value of Pₖ=K(Tₐ-Tₛ) for the power Pₖ is placed in the equation, the equation is as follows${\text{K}}_{\text{e}} {\text{=K(T}}_{\text{a}} {\text{-T}}_{\text{s}} {\text{)/(T}}_{\text{a}} {\text{-T}}_{\text{e}} \text{).}$ Assume that Tₐ>Tₛ,Tₑ. Let us examine three different cases:
- Tₑ>Tₛ:: coefficient (Tₐ-Tₛ)/(Tₐ-Tₑ)>1, thus Kₑ>K; (Tₐ-Tₛ)/(Tₐ-Tₑ) decreases when Tₐ increases
- Tₑ=Tₛ:: coefficient (Tₐ-Tₛ)/(Tₐ-Tₑ)=1, thus Kₑ=K; (Tₐ-Tₛ)/(Tₐ-Tₑ) is not dependent on the value of Tₐ
- Tₑ<Tₛ:: coefficient (Tₐ-Tₛ)/(Tₐ-Tₑ)<1, thus Kₑ<K; (Tₐ-Tₛ)/(Tₐ-Tₑ) increases when Tₐ increases.
It is noted that if the correct value Tₑ=Tₛ is provided as the temperature estimate of the medium, the value Kₑ calculated for the thermal conductivity K is correct, i.e. Kₑ=K. If an incorrect value Tₑ≠Tₛ is provided as the temperature estimate, the value calculated for Kₑ is inaccurate and it also depends on the temperature Tₐ of the sensor. Therefore, the accuracy of the estimate Tₑ provided for the temperature Tₛ of the medium, as well as the direction of the required correction, can be inferred from the correlation between the value Kₑ calculated for the thermal conductivity and the temperature Tₐ of the sensor. Furthermore, it is easy to see that there is a clear dependency between the error in the temperature estimate used for the medium and the degree of correlation between Tₐ and Kₑ, wherefore in addition to the direction of the required correction, the degree of the correction can also be inferred on the basis of the correlation checking. Similar results are obtained when Tₐ<Tₛ,Tₑ.

Changing the temperature Tₐ of the sensor as a time function and monitoring the value Kₑ calculated for the thermal conductivity to see whether it correlates with the temperature Tₐ of the sensor reveals whether the temperature estimate Tₑ used for the medium in the calculation is correct, and if it is incorrect, the direction and degree of the required correction are also discovered.

If the thermal capacity C of the sensor is known, the thermal conductivity K can be determined even though the temperature of the sensor would change at the moment of determination. Since Tₐ is a known time function, dTₐ/dt is also known, wherefore the following equation is obtained for the thermal conductivity${\text{K}}_{\text{e}} {\text{=P}}_{\text{k}} {\text{/(T}}_{\text{a}} {\text{-T}}_{\text{e}} {\text{) = (P}}_{\text{tot}} {\text{-P}}_{\text{c}} {\text{)/(T}}_{\text{a}} {\text{-T}}_{\text{e}} {\text{)=(P}}_{\text{tot}} {\text{-C•dT}}_{\text{a}} {\text{/dt)/(T}}_{\text{a}} {\text{-T}}_{\text{e}} \text{).}$ All the variables on the right side of the equation are known, wherefore K can be calculated. Therefore measurement results are obtained in real time at any desired moment.

If the primary target of interest is the measurement of the thermal conductivity, and if the effect of the correlation between the temperature Tₐ of a sensor of a certain size and the calculated thermal conductivity Kₑ on the determined value of Kₑ is known, it is not necessary to correct the temperature estimate Tₑ of the medium, but the value Kₑ calculated for the thermal conductivity can be directly corrected with an amount that is a known function of correlation.

If the temperature Tₛ of the medium changes relatively steadily during a certain time period, a new value can be extrapolated for the temperature estimate Tₑ of the medium already before the correlation between the temperature Tₐ of the sensor and the value Kₑ determined for the thermal conductivity is determined.

In order to measure the thermal capacity C of the sensor, the thermal conductivity K is first determined when the temperature of the sensor is Tₐ. The temperature Tₐ of the sensor is changed with a differentially small amount dTₐ during dt. The expression for the total power is written in another form${\text{C•dT}}_{\text{a}} {\text{/dt=P}}_{\text{tot}} {\text{-K(T}}_{\text{a}} {\text{-T}}_{\text{s}} \text{)} {\text{<=> C=(P}}_{\text{tot}} {\text{-K(T}}_{\text{a}} {\text{-T}}_{\text{s}} {\text{))/(dT}}_{\text{a}} {\text{/dt)=(P}}_{\text{tot}} {\text{-P}}_{\text{k}} {\text{)/(dT}}_{\text{a}} \text{/dt).}$ Since the change dTₐ in the temperature of the sensor is very small, K(Tₐ-Tₛ)=Pₖ is constant. Pₜₒₜ-Pₖ in the numerator represents the change of power that is required to alter the temperature of the sensor at the speed of dTₐ/dt, compared to a situation wherein the temperature of the sensor remains constat.

According to an embodiment which does not form part of the invention, it is not necessary that the thermal conductivity K is known when the thermal capacity is being measured, since C can also be determined for example in the following manner. Assume that the temperature of the sensor is changed with a differentially small amount dTₐ during dt, whereupon the following equation holds:${\text{P}}_{\text{tot,1}} {\text{=P}}_{\text{c}} {\text{+P}}_{\text{k}} {\text{=C•dT}}_{\text{a}} {\text{/dt+P}}_{\text{k}} \text{.}$ The temperature of the sensor is changed next at an equal rate to the opposite direction, whereupon the equation${\text{P}}_{\text{tot,2}} {\text{=C•-dT}}_{\text{a}} {\text{/dt+P}}_{\text{k}}$ holds. Since dTₐ is small, Pₖ is constant. Subtracting the equations produces${\text{P}}_{\text{tot,1}} {\text{-P}}_{\text{tot,2}} {\text{=C•2dT}}_{\text{a}} \text{/dt} {\text{=> C=(P}}_{\text{tot,1}} {\text{-P}}_{\text{tot,2}} {\text{)/(2dT}}_{\text{a}} \text{/dt).}$

The invention is suitable for determining the thermal conductivity and thermal capacity of the sensor and the medium simultaneously with determining the temperature. The thermal conductivity of the medium may change for example due to a change in the flow conditions or due to changing properties of the medium. The thermal capacity may change for example due to contamination of the sensor or due to a change in the properties of the medium.

Suitable applications of the invention include for example measuring the flow rate of the medium, indicating touch, determining moisture content, measuring pressure, measuring gas moisture, measuring thermal properties through a tube wall, and determining levels of containers.

King's law${\text{P}}_{\text{k}} {\text{=K(T}}_{\text{a}} {\text{-T}}_{\text{s}} {\text{)=(C}}_{\text{0}} {\text{+C}}_{\text{1}} {\text{v}}^{\text{½}} {\text{)(T}}_{\text{a}} {\text{-T}}_{\text{s}} \text{),}$ wherein C₀ and C₁ are constants characteristic of the measuring arrangement and v is the flow rate of the medium, approximately holds for an object surrounded by a flowing medium. The thermal conductivity K can be determined in the manner described above, so that the flow rate can be calculated from the formula${\text{v=[(K-C}}_{\text{0}} {\text{)/C}}_{\text{1}} {\text{]}}^{\text{2}} \text{.}$ King's law can be specified to take into account for example the turbulence, viscosity, moisture and pressure of the medium without any effect on the principle of the method.

The invention is also highly applicable to the measurement of flow rate through the tube wall. The sensor is connected thermally to the tube wall, so that the tube has approximately the temperature Tₐ of the sensor. The situation corresponds to what is described above, except that unlike in the case above, heat is here transferred between the sensor and the surroundings with the power Pᵥ, since the sensor is not entirely surrounded by the medium to be measured. When this term is added to the total power, the measurement resumes the normal form wherein the sensor is entirely surrounded by the medium. Measurement through the tube wall enables easy post-assembly and maintenance, the system is strong and it does not affect the flow of the matter in the tube. Furthermore, the amount of contamination gathering on the inner surface of the tube can be estimated by measuring the thermal capacity.

Touch is indicated by immersing the temperature sensor in a structure having thermal conductivity and thermal capacity that change when the surface of the material is touched, and the touch can be detected regardless of the temperature of the object that is touching.

An increase in moisture usually improves the thermal conductivity of the medium, and this can be detected with the method according to the invention. Useful applications include for example plant cultivation and monitoring the drying of structures for example in connection with concreting and water damages. A change in the surrounding temperature does not affect the measurement.

When the pressure increases, the thermal capacity of the gas increases, and this can be measured. It is easiest to perform such measurement if the gas to be measured surrounding the sensor is immobile. This can be implemented for example by surrounding the sensor with a measuring chamber which is connected to the pressure to be measured via a capillary tube. The immobility of the gas is not necessary, however.

The measurement of the gas moisture is performed by coating or filling the sensor with a suitable hygroscopic matter which absorbs the more water the greater the atmospheric moisture is. The method enables the detection of a change in the thermal capacity of the hygroscopic matter in the sensor. Another method is to measure the thermal capacity of the sensor and to keep it constant by changing the temperature of the sensor, whereupon the required temperature is a function of moisture.

Thermal properties can be measured through the tube wall by thermally connecting the sensor to the tube wall. Suitable properties of the tube wall are good thermal conductivity between the inner and outer surface of the wall, but poor thermal conductivity in the direction of the tube wall (for example tubes with thin walls and tubes of thermally anisotropic material). In such a case, heat tends to be transferred between the sensor and the medium to be measured, and it is easy to measure the thermal properties of the medium. For example the flow of the medium increases the thermal conductivity and can therefore be measured. Impurities attached to the interior of the tube change the thermal capacity and are detectable. Since the slowness (ratio C/K) of the system is often great in such an application, it is difficult to apply the conventional measurement of one temperature element based on determining the cooling rate.

The rise of the container surface to the level of the sensor changes the thermal conductivity. The temperature of the contents of the container does not affect the measurement, and measurement is possible even through the container wall.

Separating two macroscopic liquid phases is possible by detecting the thermal conductivity of the liquid phase flowing past the sensor. A system forming such macroscopic liquid phases can consist of for example a lubricating oil and water mixed with it during a disturbance situation.

Since the thermal slowness of the sensor is not very significant, the sensor can be made strong and for example a spherical housing can be used, so that with sufficiently thin wiring and suspension the sensor can be made independent of the direction of flow in space and not only in the plane as in the case of utilizing a tubular housing. The temperature of a symmetrical housing that is mounted around the element and that is very heat conductive (e.g. aluminium, aluminium oxide, copper or silver) is the same everywhere, so that none of the directions of flow differs from the others for geometrical reasons, wherefore the sensor is insensitive to changes in the direction of flow. In a sensor having two elements, it is impossible to obtain symmetry in three dimensions, even though ideal temperature elements could be used.

The circuit according to the invention can be realized in several different ways, but the arrangement described herein has been kept simple in order to illustrate the principle of the invention. It is clear for a person skilled in the art that the different embodiments of the invention are not restricted to the above-described examples, but they may vary within the scope of the appended claims.

## Claims

1. A real-time adaptive measuring method for determining the thermal conductivity K between a sensor (2) and a medium, and for determining the temperature Tₛ of the medium by means of the sensor (2) that is in a thermal exchange relation with the medium, by changing the temperature Tₐ of the sensor (2) by means of supplying thermal power Pₜₒₜ to the sensor and by measuring the thermal power Pₜₒₜ supplied to the sensor (2), **characterized in that**
- such thermal power Pₖ is supplied to the sensor (2) that the temperature Tₐ of the sensor (2) follows in real time a desired time-dependent temperature function,
- the temperature Tₛ of the medium is approximated with the value Tₑ,
- a value Kₑ=Pₖ/(Tₐ-Tₑ) is calculated for the thermal conductivity K by means of the thermal power Pₖ keeping the temperature Tₐ of the sensor (2) in accordance with the desired temperature function, the temperature Tₐ, and the temperature estimate Tₑ of the medium,
- the temperature estimate Tₑ of the medium is altered, if necessary, so that the correlation between the temperature Tₐ of the sensor and the calculated thermal conductivity Kₑ disappears, indecating that the calculated thermal conductivity Ke coincides with the thermal conductivity K and the temperature estimate Tₑ coincides with the temperature Tₛ.

2. A method according to claim 1, **characterized in that** a value is calculated for the thermal capacity C of the sensor (2) by means of the thermal power P_{c} required to obtain the rate of change dTₐ/dt of the temperature Tₐ of the sensor (2) and by means of the rate of change dTₐ/dt, whereby C=P_{c}/(dTₐ/dt) and the thermal power Pₜₒₜ=P_{c}+Pₖ.

3. A method according to claim 1 or 2 **characterized in that** the time-dependent temperature function followed in real time by the temperature Tₐ of the sensor (2) is altered in a desired manner adaptively according to the circumstances.

4. A method according to claim 1, 2 or 3, **characterized in that** the direction in which the temperature estimate Tₑ of the medium is corrected is inferred from the sign of the correlation between the temperature Tₐ of the sensor and the calculated thermal conductivity Kₑ.

5. A method according to claim 4, **characterized in that** the change in the temperature estimate Tₑ of the medium is predicted through extrapolation, and the temperature estimate Tₑ is corrected before the correlation between the temperature Tₐ of the sensor and the value Kₑ calculated for the thermal conductivity is examined.

6. A method according to claim 1, **characterized in that** the value Kₑ calculated for the thermal conductivity is corrected with an amount that is a known function of the correlation between the temperature Tₐ of the sensor and the value Kₑ calculated for the thermal conductivity.

7. A method according to claim 1, **characterized in that** in order to compensate for an error caused by changes, such as contamination or corrosion, occurring on the surface of the sensor, the value Kₑ determined for the thermal conductivity is altered with an amount that is a known function of the difference between the thermal capacities C determined for the sensor at the moment of measurement and at the moment of calibration.

## Patentansprüche

1. Realzeitiges adaptives Messverfahren zur Bestimmung der Wärmeleitfähigkeit K zwischen einem Sensor (2) und einem Medium und zur Bestimmung der Temperatur Tₛ des Mediums anhand des Sensors (2), der im Wärmeaustauschverhältnis mit dem Medium steht, indem die Temperatur Tₐ des Sensors (2) **dadurch** geändert wird, dass Wärmeleistung Pₜₒₜ dem Sensor gespeist wird, und indem die dem Sensor (2) gespeiste Wärmeleistung Pₜₒₜ gemessen wird, **dadurch gekennzeichnet, dass**
solche Wärmeleistung Pₖ dem Sensor (2) gespeist wird, dass die Temperatur Tₐ des Sensors (2) realzeitig einer gewünschten zeitabhängigen Temperaturfunktion folgt,
die Temperatur Tₛ des Mediums mit dem Wert Tₑ approximiert wird,
ein Wert Kₑ=Pₖ/(Tₐ-Tₑ) für die Wärmeleitfähigkeit K anhand der die Temperatur Tₐ des Sensors (2) entsprechend der gewünschten Temperaturfunktion haltenden Wärmeleistung Pₖ, der Temperatur Tₐ und der Temperaturschätzung Tₑ des Mediums gerechnet wird,
die Temperaturschätzung Tₑ des Mediums gegebenenfalls so geändert wird, dass die Korrelation zwischen der Temperatur Tₐ des Sensors und der gerechneten Wärmeleitfähigkeit Kₑ verschwindet, was indiziert, dass die gerechnete Wärmeleitfähigkeit Kₑ mit der Wärmeleitfähigkeit K und die Temperaturschätzung Tₑ mit der Temperatur Tₛ übereinstimmt.

2. Verfahren nach Anspruch 1, **dadurch gekennzeichnet, dass** ein Wert für die Wärmekapazität C des Sensors (2) anhand der Wärmeleistung P_{c}, die für die Erhaltung der Umwandlungsgeschwindigkeit dTₐ/dt der Temperatur Tₐ des Sensors (2) erforderlich ist, und anhand der Umwandlungsgeschwindigkeit dTₐ/dt gerechnet wird, wobei C=P_{c}/(dTₐ/dt) und die Wärmeleistung Pₜₒₜ=P_{c}+Pₖ ist.

3. Verfahren nach Anspruch 1 oder 2, **dadurch gekennzeichnet, dass** die von der Temperatur Tₐ des Sensors (2) realzeitig gefolgte zeitabhängige Temperaturfunktion adaptiv gemäß den Verhältnissen auf die gewünschte Weise geändert wird.

4. Verfahren nach Anspruch 1, 2 oder 3, **dadurch gekennzeichnet, dass** die Richtung, in der die Temperaturschätzung Tₑ des Mediums korrigiert wird, aus dem Vorzeichen der Korrelation zwischen der Temperatur Tₐ des Sensors und der gerechneten Wärmeleitfähigkeit Kₑ gefolgert wird.

5. Verfahren nach Anspruch 4, **dadurch gekennzeichnet, dass** die Änderung in der Temperaturschätzung Tₑ des Mediums durch Extrapolation vorausgesagt wird und die Temperaturschätzung Tₑ korrigiert wird, bevor die Korrelation zwischen der Temperatur Tₐ des Sensors und dem für die Wärmeleitfähigkeit gerechneten Wert Kₑ betrachtet wird.

6. Verfahren nach Anspruch 1, **dadurch gekennzeichnet, dass** der für die Wärmeleitfähigkeit gerechnete Wert Kₑ um eine Menge korrigiert wird, die eine bekannte Funktion der Korrelation zwischen der Temperatur Tₐ des Sensors und dem für die Wärmeleitfähigkeit gerechneten Wert Kₑ ist.

7. Verfahren nach Anspruch 1, **dadurch gekennzeichnet, dass**, um einen durch Änderungen, z.B. Kontamination oder Korrosion, verursachten Fehler auf der Oberfläche des Sensors zu kompensieren, der für die Wärmeleitfähigkeit bestimmte Wert Kₑ um eine Menge geändert wird, die eine bekannte Funktion der Differenz zwischen der für den Sensor im Zeitpunkt der Messung und im Zeitpunkt der Kalibrierung bestimmten Wärmekapazitäten C ist.

## Revendications

1. Procédé de mesure temps réel adaptable pour déterminer la conductivité thermique K entre un capteur électrique (2) et un milieu, et pour déterminer la température Tₛ du milieu avec le capteur (2) ayant un échange thermique avec le milieu, en changeant la température Tₐ du capteur (2) en fournissant de la puissance thermique Pₜₒₜ au capteur et en mesurant la puissance thermique Pₜₒₜ fournie au capteur (2), **caractérisé en ce**
**qu'**au capteur (2) est fournie une puissance thermique Pₖ à cause de laquelle la température Tₐ du capteur (2) suit en temps réel une fonction temporelle de température désirée,
**que** la température Tₛ du milieu est approximée par la valeur Tₑ,
**qu'**une valeur Kₑ = Pₖ/(Tₐ - Tₑ) est calculée pour la conductivité thermique K en utilisant la puissance thermique Pₖ qui maintient la température Tₐ du capteur (2) en accord avec la fonction de température désirée, la température Tₛ et l'estimation de la température Tₑ du milieu,
l'estimation de la température Tₑ du milieu est changée, si nécessaire, de façon à faire disparaître la corrélation entre la température Tₐ du capteur et la conductivité thermique calculée Kₑ, indiquant que la conductivité thermique calculée Kₑ s'accorde avec la conductivité thermique K, et l'estimation de température Tₑ s'accorde avec la température Tₛ.

2. Procédé selon la revendication 1, **caractérisé en ce qu'**une valeur est calculée pour la capacité thermique C du capteur (2) en utilisant la puissance thermique P_{c} requise pour obtenir le taux de variation dTₐ/dt de la température Tₐ du capteur (2) et en utilisant le taux de variation dTₐ/dt, de sorte que C=P_{c}/(dTₐ/dt) et la puissance thermique Pₜₒₜ=P_{c}+Pₖ.

3. Procédé selon la revendication 1 ou 2, **caractérisé en ce que** la fonction temporelle de température suivie en temps réel par la température Tₐ du capteur (2) est changée dans une manière désirée adaptable selon les circonstances.

4. Procédé selon la revendication 1, 2 ou 3, **caractérisé en ce que** le sens dans lequel l'estimation de la température Tₑ du milieu est corrigée est conclu du signe de la corrélation entre la température Tₛ du capteur et la conductivité thermique calculé K.

5. Procédé selon la revendication 4, **caractérisé en ce que** le changement de l'estimation de la température Tₑ du milieu est prévu par extrapolation, et l'estimation de la température Tₑ est corrigée avant l'examen de la corrélation entre la température Tₛ du capteur et la valeur Kₑ calculée pour la conductivité thermique.

6. Procédé selon la revendication 1, **caractérisé en ce que** la valeur Kₑ calculée pour la conductivité thermique est corrigée en utilisant un montant qui est une fonction connue de la corrélation entre la température Tₐ du capteur et la valeur Kₑ calculée pour la conductivité thermique.

7. Procédé selon la revendication 1, **caractérisé en ce que** pour compenser une erreur causée par des changements, tels contamination ou corrosion, se présentant sur la surface du capteur, la valeur Kₑ déterminée pour la conductivité thermique est changée en utilisant un montant qui représente une fonction connue de la différence entre les capacités thermiques C déterminées pour le capteur au moment de mesure et au moment de calibrage.
